# EUROPEAN PATENT APPLICATION

(11) **EP 4 847 467 A1**
(43) Date of publication of application: **02.12.2026**
(21) Application number: 25179030.9
(22) Date of filing: 27.05.2025
(51) Int. Cl.: C03C 17/00, C03B 11/00, C03C 17/34, C03C 19/00, C03C 23/00, B24B 1/00, B60R 13/02

(54) **A VEHICLE INTERIOR ELEMENT**

(71) Applicant: Bugatti Rimac D.o.o., 10431 Sveta Nedelja (HR)
(72) Inventor: Malaguti, Davide, Samobor (HR)
(74) Representative: Hoffmann Eitle

(57) **Abstract**

There is provided a vehicle interior element comprising a glass body, the glass body having a first surface for mounting the vehicle interior element in the vehicle interior and a second surface to face the vehicle interior when the vehicle interior element is mounted in the vehicle interior, wherein, the glass body in at least one portion has a first thickness t1 between the first surface and the second surface, wherein preferably the first thickens t1 is at least 2.0 mm, wherein at least a part of at least one of the first surface and the second surface has a profiled shape, wherein the height of the profiled shape on at least one position is at least 3 to 4 times the first thickness t1.

## Description

### TECHNICAL FIELD

The present invention relates to a vehicle interior element and a method for fabricating the vehicle interior element.

### BACKGROUND

In recent years, glass is used in a vehicle interior for covering various parts of the vehicle interior for giving a finish to the covered parts of the vehicle interior that is pleasant to the touch, since the glass has very good haptic properties, is resistant to scratches or to other similar damages and increases the aesthetic of appearance of the vehicle interior, since the glass has very good optical appearance. Lately, glass is also used for covering various parts of the vehicle interior in safety related areas of the vehicle interior. Safety related areas in the vehicle interior may be, for example, areas that are in the vicinity of the vehicle occupant (s). However, in safety related areas, it is needed that the glass covering one or more parts of the vehicle interior satisfies safety related requirements in order not to endanger the vehicle occupant(s) during a safety relevant situation, such as a collision or other impact, that may lead to breaking of the glass and/or braking of the one or more of the parts of the vehicle interior covered by the glass.

Thermoforming and/or vacuum process are common technologies used for producing a glass element for covering a part of the vehicle interior. These technologies allow for manufacturing of a glass element with a thickness of around 1 mm to 1.4 mm.

Further, a glass element mounted on a part of the vehicle interior should have the shape of the part of the vehicle interior on which it is mounted. This necessitates the glass element to have a complex shape, strongly different from a flat shape or a slightly curved shape. However, the thermoforming and/or vacuum process allow for production of a glass element which has a flat shape or has small, localized bumps with smooth radius or has a curved shape but with a large curvature radius. In addition, these technologies may leave marks on the glass element which disturb the functional as well as aesthetical functionality of the glass element.

Accordingly, there is a need for providing for a glass element that can be applied in a safety relevant area of the vehicle interior, with an improved thickness and a complex shape.

### SUMMARY

To achieve this object, there is provided in one aspect of the present invention a vehicle interior element comprising a glass body, the glass body having a first surface for mounting the vehicle interior element in the vehicle interior and a second surface to face the vehicle interior when the vehicle interior element is mounted in the vehicle interior,
wherein, the glass body in at least one portion has a first thickness (t1) between the first surface and the second surface, wherein preferably the first thickness (t1) is at least 2.0 mm,
wherein at least a part of at least one of the first surface and the second surface has a profiled shape, wherein the height of the profiled shape on at least one position is at least 3 to 4 times the first thickness (t1).

There is provided in a further aspect of the present invention a method for producing a vehicle interior element comprising a glass body, the glass body having a first surface for mounting the vehicle interior element in the vehicle interior and a second surface to face the vehicle interior when the vehicle interior glass element is mounted in the vehicle interior, wherein the glass body in at least one portion has a first thickness (t1) between the first surface and the second surface, wherein preferably the first thickness (t1) is at least 2.0 mm, wherein at least a part of at least one of the first surface and the second surface has a profiled shape, wherein the height of the profiled shape on at least one position is at least 3 to 4 times the first thickness (t1), the method comprising:
- providing a glass element in a mould unit;
- heating the glass element provided in the mould unit to thereby melt the glass element in the mould unit;
- cooling the melted glass element in the mould unit to thereby provide a solid glass element;
- removing the solid glass element from the mould unit,
   and
- milling the solid glass element to produce the glass body.

There is provided in a still further aspect of the present invention a vehicle comprising the vehicle interior element according to the above aspect.

### BRIEF DESCRIPTION OF THE DRAWINGS

Embodiments of the present invention which are presented for better understanding the inventive concept of the present invention, but which are not to be seen as limiting the present invention, will now be described with reference to the figures in which:
- Figures 1A, 1B, 1C and 1D: show schematically illustrative examples of the vehicle interior element according to an embodiment of the present invention;
- Figure 2: shows different views of an illustrative example of the vehicle interior element according to the embodiment of the present invention;
- Figure 3: shows schematically a cross-section of a vehicle interior element according to the embodiment of the present invention;
- Figure 4: shows schematically the steps of the method for fabricating the vehicle interior element according to the embodiment of the present invention.

### DETAILED DESCRIPTION

In a vehicle, a vehicle interior element that covers a part of the vehicle interior to increase, for example, the aesthetic appearance of the vehicle interior and/or to protect the covered part of the vehicle interior from an unwanted damage, for example scratching, is also called a vehicle interior trim element.

The part of the vehicle interior may be seen as a part of the vehicle body in the vehicle interior.

By way of example, a vehicle interior trim element may be provided on the centre console of the vehicle, such as automobile, that is arranged between the driver seat and the passenger seat.

The vehicle interior trim element normally has two surfaces. One surface is for mounting the vehicle interior trim element on the part of the vehicle interior. This surface is also called the inner surface, or the "B surface". Hence, this surface faces the part of the vehicle interior on which the vehicle interior trim element is mounted. By way of example, at least a part of this surface is in contact (direct or indirect) with the part of the vehicle interior. Another, opposite, surface faces the vehicle interior when the vehicle interior trim element is mounted on the part of the vehicle interior. This surface is visible to the vehicle occupant(s) and hence is the visible surface of the vehicle interior trim element.

In the present disclosure, the phrases "vehicle interior element" and "vehicle interior trim element" may be interchangeably used, however, the word "trim" is by no way limiting to the present invention. Further, in the present disclosure, for explanatory purpose, it will be assumed that the vehicle interior element according to the embodiment of the present invention to be mounted in the vehicle interior is to be mounted on a part in the vehicle interior, the part being a part of the body of the vehicle in the vehicle interior, the part being, for example, the centre console of the vehicle (for example an automobile), however, this is by no way limiting to the vehicle interior element according to the embodiment of the present invention.

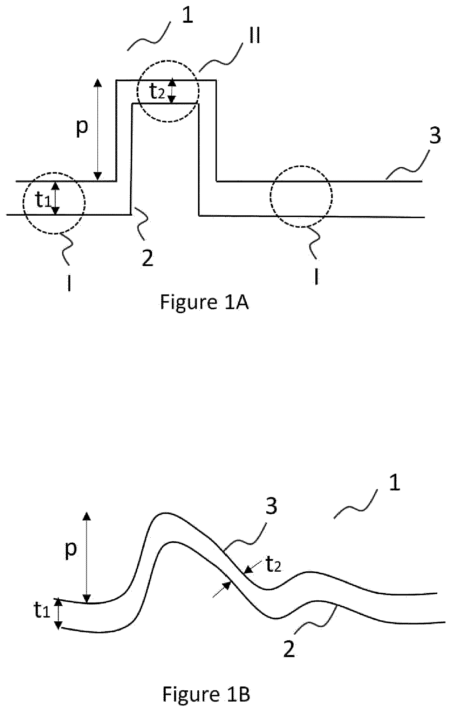

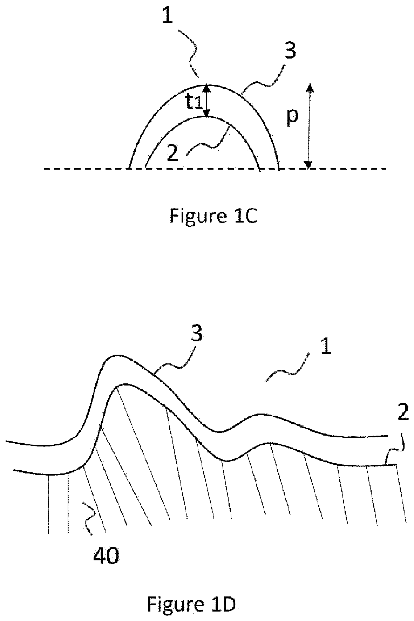

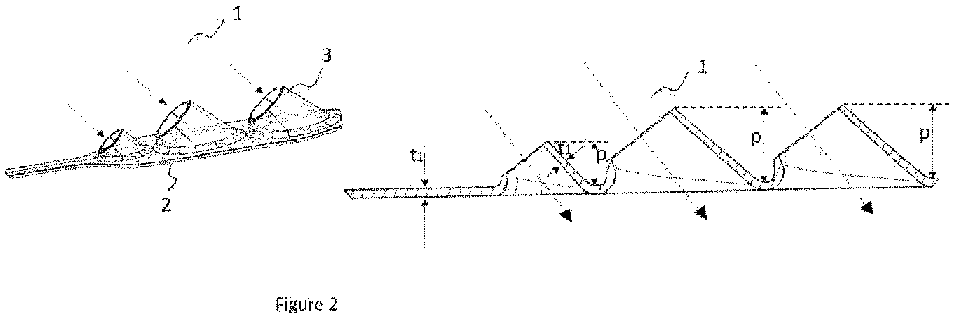

Figures 1 and 2 show schematically different illustrative examples of cross-sectional diagrams of the vehicle interior element according to embodiment of the present invention.

There is shown in figures 1 and 2 that the vehicle interior element comprises a glass body 1. The glass body 1 has a first surface 2 for mounting the vehicle interior element in the vehicle interior, and more specifically for mounting it on a part in the vehicle interior, the part being a part of the vehicle body (for example the central console), and a second surface 3 to face the vehicle interior when the vehicle interior element is mounted in the vehicle interior (is mounted on the part in the vehicle interior, for example is mounted on the central console of the vehicle).

The first surface 2 of the glass body 1 may also be called "B surface" or inner surface. The second surface 3 may also be called "A surface" or visible surface since the second surface 3 is the surface that is visible and accessible to the vehicle occupant(s) when the vehicle interior element is mounted on the part in the vehicle interior.

In the embodiment of the present invention, the glass body 1, in at least one portion, has a first thickness (t1) between the first surface 2 and the second surface 3. The first thickness (t1) may be at least 2.0 mm. The first thickness (t1) may be not more than 50.0 mm. Preferably, the glass body 1, in at least one portion, may have the first thickness (t1) between the first surface and the second surface being a value in the range of 2.0 mm to 50.0 mm. More preferably, the glass body 1, in at least one portion, may have the first thickness (t1) between the first surface and the second surface being a value in the range of 2.0 mm to 10.0 mm or in the range of 2.0 mm to 5.0 mm, or in the range of 5.0 mm to 10.0 mm. Here, the word "portion" is to be broadly understood in that the size of the portion is not limiting to the vehicle interior element. This means that the glass body 1 may have the first thickness (t1) between the first surface 2 and the second surface 3 throughout its entirety or may have the first thickness (t1) between the first surface 2 and the second surface 3 as indicated above in at least one portion, while in one or more other portions may have a second thicknesses (t2) between the first surface 2 and the second surface 3 smaller than the first thickness (t1). For example, when the first thickness (t1) in at least one portion of the glass body 1 is 2.0 mm, the glass body 1 may have in one or more portions a second thickness (t2) with a value smaller than 2.0 mm.

By way of example, in figure 1A, the glass body has the first thickness (t1) between the first surface 2 and the second surface 3 in the portions denoted with I and has the second thickness (t2) which is smaller than the first thickness (t1) in the portion denoted with II.

At least a part of at least one of the first surface 2 and the second surface 3 has a profiled shape. The height (p) of the profiled shape on at least one position of the profiled shape of the at least one of the first surface 2 and the second surface 3 is at least 3 to 4 times the first thickness (t1) in the at least one portion. In other words, the height (p) of the profiled shape on at least one position of the profiled shape has a value that is at least the product of a value in the range of 3 to 4 with the first thickness (t1) in mm. By way of example, when the first thickness (t1) is 2.0 mm, the height (p) of the profiled shape is at least (3 to 4) multiplied with 2.0 in mm, or in other words is at least from 6.0 mm to 8.0 mm. In the example shown in figure 1A, (p) shown with double-sided arrow on a position of the second surface 3 is at least (3 to 4) times (t1).

In general terms, the profiled shape is to be understood as a shape that differs from a flat (planar) shape. More particularly, the profiled shape comprises one or more features that makes the shape of at least a part of at least one of the first surface 2 and the second surface 3 to differ from a flat (planar) shape. By way of example, the profiled shape comprises at least one of a projection, a slope, a bent portion, and a curved portion. The word "portion" may also extend to the entire at least one of the first surface 2 and the second surface 3, for example, at least one of the first surface 2 and the second surface 3 is a curved surface, the height of the profiled shape being determined by the radius of the curvature of the curved surface.

By way of a further example, the profiled shape may comprise one or more peaks and/or valleys. It is to be understood that the value (p) for the height of the profiled shape may be seen as a distance (a height difference), for example the vertical distance, between a peak (highest point) and valley (lowest point) of the profiled shape, as is shown, for example, in figures 1A and 1B. It is further to be understood that the profiled shape of at least a part of at least one of the first surface 2 and the second surface 3 differs from the inherent surface roughness or inherent and unintentional surface irregularities (that may be caused for example by the manufacturing process) of the corresponding first surface 2 and second surface 3.

It is to be understood that the exact form (shape) of the profiled shape is not limiting to the present invention since the exact form depends on the shape of the part in the vehicle interior on which the vehicle interior element is to be mounted. The form of the profiled shape is normally such that it is in conformity with the shape of the part in the vehicle interior on which the vehicle interior element is to be mounted.

Illustrative examples of different forms of the profiled shape are shown in figures 1A to 1D as well as in figure 2, however, none of the shown illustrative examples of the profiled shape are to be seen as limiting to the present invention.

There is shown in figure 1A that the profiled shape of each of the first surface 2 and the second surface 3 comprises a projection (peak) projecting away from the flat parts (valleys) of each of the first surface 2 and the second surface 3. The double-sided arrows indicate (p) and (t1). As indicated above, (p) on at least one position of the profiled shape is at least (3 to 4) times (t1). It is to be noted that in figures 1A, 1B and 1C, (p) is shown for the second surface 3. The same may apply for the first surface 2.

There is shown in figure 1B a further illustrative example of the profiled shape of each of the first surface 2 and the second surface 3. In this example, the profiled shape of each of the first surface 2 and the second surface 3 comprises two projections and has smoother transitions between the peaks and the valleys than the example shown in figure 1A. The double-sided arrows indicate (p) and (t1). At least for the left-hand peak, (p) is at least (3 to 4) times (t1).

There is shown in figure 1C a further example of the profiled shape. In this example, both of the first surface 2 and the second surface 3 are curved surfaces, without flat portions. The height of the profiles shape (p) is determined by the radius of the curvature and may be seen as the height between the highest point of the curvature (in this example that is the curvature of the second surface 3) to the lowest point, the lowest point lying on an imaginary flat surface (denoted with a dashed line).

There is shown in figure 1D a further example of the profiled shape, similar to the example shown in figure 1B. There is shown in figure 1D that the glass body 1 is mounted on the part 40 of the vehicle interior (indicated with the filling with vertical lines). There is shown in this figure, that the profiled shape of at least the first surface 2 is in conformity with the shape of the part 40 of the vehicle interior.

There are shown in the left and right panel in figure 2 two different views of a more specific illustrative example of the glass body 1 of the embodiment of the present invention and more particular of a more specific illustrative example of the profiled shape. The dashed-dotted arrows in figure 2 indicate openings in the second surface 3 and the first surface 2. These openings serve to expose one or more areas of the part in vehicle interior on which the vehicle interior element is to be mounted. By way of example, when the vehicle interior element is mounted on the central console in the vehicle and the central console comprises knobs that should be accessible to the vehicle occupant(s), the glass body 1 comprises the openings in the first surface 2 and the second surface 3 shown with the dashed-dotted arrows in figure 2.

The thickness (t1) is shown in the right panel of figure 2. Examples of the height (p) of the profiled shape that satisfies the condition of being at least (3 to 4) times (t1) is shown in the right panel with double-sided arrows denoted with (p) .

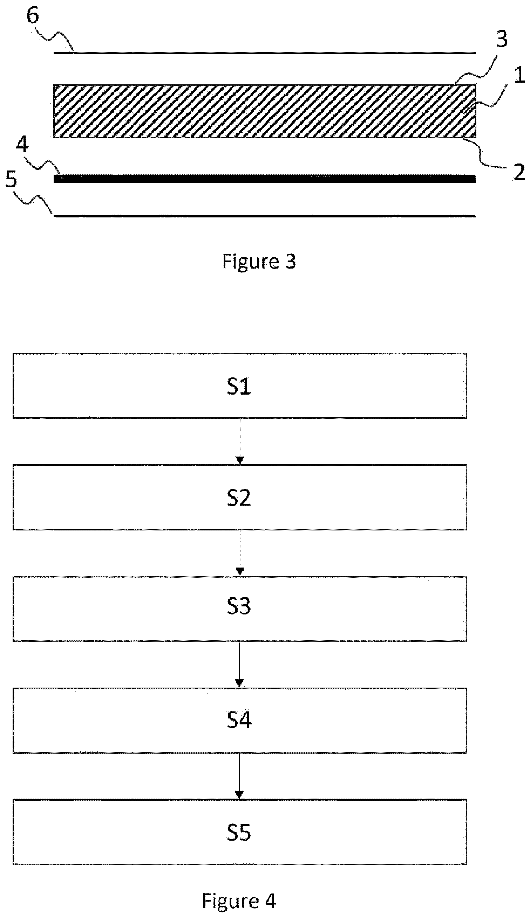

There is schematically shown in figure **3****,** that the vehicle interior element of the embodiment of the present invention may comprise one or more other layers further to comprising the glass body 1. For illustrative purposes, the profiled shape is not shown in figure **3****.**

The vehicle interior element may comprise a first anti-shatter layer 4 provided on the first surface **2.** The vehicle interior element comprising the first anti-shatter layer 4 provided on the first surface 2 of the glass body may be particularly advantageous when the vehicle interior element is mounted in safety related areas in the vehicle interior. For example, the central console being in the vicinity of the driver seat and the passenger seat may be seen as being in a safety related area in the vehicle interior.

The first anti-shatter layer 4 has the purpose of preventing pieces of the part of the vehicle interior on which the vehicle interior element is mounted that detach from the part of the vehicle interior during collision or any other impact or any other damage in the vehicle interior to pierce the glass body 1 thereby breaking the glass body 1 and spreading away in the vehicle interior presenting a danger for the vehicle occupant (s). In an embodiment of the present invention, the first anti-shatter layer 4 may be a plastic resin material. The first anti-shatter layer 4 may be a coating layer or an adhesive layer, or a film layer, or a combination of any of them. In a non-limiting example, the first anti-shatter layer 4 may be deposited on the glass body 1 by spraying.

The vehicle interior element may further comprise a first coating layer 5 provided on the first anti-shatter layer 4. The first coating layer 5 may facilitate the mounting of the vehicle interior element on the part of the vehicle interior, for example, on the central console. The first coating layer 5 may prevent the spreading away of smaller fragments of the part of the vehicle interior on which the vehicle interior element is mounted during a collision or other impact. By way of a non-limiting example, the first coating layer 5 may be deposited by spraying.

The vehicle interior element may further comprise a second coating layer 6 provided on the second surface **3.** The second coating layer 6 will face the vehicle interior and hence the vehicle occupant(s) when the vehicle interior element is mounted in the vehicle interior. The second coating layer 6 may prevent that pieces of the broken glass body 1 spread away in the vehicle interior during a collision or other impact.

Therefore, several factors may be considered for choosing the material of the second coating layer 6. By way of example, the stiffness or the elasticity of material for the second coating layer 6 should be such that the second coating layer 6 deforms but preferably does not break when the glass body 1 breaks. In this way, the second coating layer 6 may absorb or at least reduce the impact of the breaking glass and prevent or at least reduce the pieces of broken glass spreading in the vehicle interior. Further, the optical properties of the material of the second coating layer 6 may be considered for selecting a transparent second coating layer 6. Other factors are for example the durability of the material, the flammability, scratch resistance, sun light and UV light resistance and similar. Further, the material of the second coating layer 6 should also maintain the cleanliness of the glass body 1. By way of example, it can be a material that prevents or reduces the remaining of fingerprints on the vehicle interior element to give a clean appearance of the vehicle interior element.

By way of a non-limiting example, the second coating layer 6 may be provided by way of spraying.

The vehicle interior element may, optionally, comprise a second anti-shatter layer (not shown in figure 3) provided between the second coating layer 6 and the glass body 1 (the second surface 3 of the glass body 1). The second anti-shatter layer may be provided for additionally preventing pieces of the broken glass body 1 from spreading in the vehicle interior.

Hence, the vehicle interior element of the embodiment of the present invention has a thick glass body 1 with a first thickness (t1) in at least one portion thereof preferably of at least 2.0 mm, and more preferably in the range of 2.0 mm to 50.0 mm, and thereby has an increased structural stability, and has a complex shape (the glass body 1 has, in a at least a part, a profiled shape with a height of the profiled shape on at least one position of at least (3 to 4) times the first thickness (t1)) and hence has a shape in conformity (to fit) with the complex shape of the part in the vehicle interior on which it is to be mounted. The vehicle interior element can be further provided with a first anti-shatter layer 4 on the first surface 2 of the glass body 1 (on the "B" surface) and a second coating layer 6 on the second surface 3 of the glass body 1 (on the "A" surface). The vehicle interior element thus behaves as a laminated glass. The first anti-shatter layer 4 serves to prevent the detachment of fragments of the part in the vehicle interior on which the vehicle interior element is provided since such fragments can damage the glass body 1, while the second coating layer 6 can reduce the spreading away of parts of the broken glass body 1 in the vehicle interior.

There are shown in figure 4 schematically the steps of a method for fabricating the vehicle interior element of the embodiment of the present invention.

In step S1 a glass element is provided in a mould unit. The mould unit has a shape that corresponds to the required shape of the second surface 3. In other words, the shape of the mould unit determines the shape of the second surface 3. Normally, the mould unit has a profiled shape to impart the profiled shape to the second surface 3. The material of the mould unit may be, for example, plaster.

The glass element may be a glass block. The glass may be a raw glass (here, the term "raw" is intended to indicate a glass that may have an unintentional presence of other material or substances further to the constituents of glass). Providing a raw glass block enables that the concentration of impurities that may occur in the fabricated vehicle interior glass element is maintained within a desired or at least acceptable limit. The glass may be of different categories, for example, soda-lime silica glass, aluminosilicate glass or borosilicate glass.

In step S2, the glass element provided in the mould unit is heated to thereby melt the glass element in the mould unit. The heating may be performed by, for example, inserting the mould unit with the provided glass element in an oven and applying a specific heat up temperature profile for a specific amount of time. For example, the mould unit with the provided glass element may be heated for 3 to 4 days in the oven.

In step S3, the melted glass element in the mould unit is cooled down to thereby provide a solid glass element.

The cooling down may be performed in the oven, for example by applying a specific cool down temperature profile, to, for example, gradually reduce the temperature in the oven to a room temperature. The cooling down may also be performed by merely removing the mould unit from the oven in a room temperature environment.

In step S2 and step S3 each of or both of the heat up and the cool down temperature profiles may be chosen such that the occurrence of imperfections in the glass element is minimized. Imperfections may relate to imperfections in the structure and/or the material composition of the glass element. Each of steps S3 and S4 may be performed in an atmosphere of an inert gas. This may prevent or at least minimize the occurrence of imperfections in the glass element.

In step S4, the solid glass element is removed from the mould unit.

In step S5, the removed solid glass element is milled to produce the glass body. The step of milling the solid glass element may comprise milling the first surface 2 to obtain the profiled shape of the first surface 2 to conform with the shape of the part in the vehicle interior on which the vehicle interior element is to be mounted.

Milling the first surface 2 is performed so that the thickness of the glass body 1 between the first surface 2 and the second surface 3 in at least one portion of the glass body 1 is the above described first thickness (t1). As described above, the first thickness (t1) may be at least 2.0 mm and may preferably be in the range of 2.0 mm to 50.0 mm. More preferably, the first thickness (t1) may be in the range of 2.0 mm to 10.0 mm or in the range of 2.0 mm to 5.0 mm, or in the range of 5.0 mm to 10.0 mm.

Optionally, the second surface 3 may also be milled for refinement of the shape of the second surface 3.

For further refinement of the shape of the glass body 1, the method may comprise grinding the glass body 1. The grinding may be performed with a handheld grinding means.

The method may further comprise polishing the glass body 1. The polishing may comprise at least one of a mechanical polishing and a chemical polishing. The polishing may be performed on each of the first surface 2 and the second surface 3.

The method may further comprise drilling the glass body. By way of example, the openings in the first surface 2 and the second surface 3 shown in figure 2 may be obtained by way of the form of the mould unit, or alternatively, or additionally, may be obtained by drilling the glass body 1.

The method may further comprise performing a plasma activation step on the glass body 1. The plasma activation may be a preparatory step before depositing the first anti-shatter 4 layer and/or the second coating layer 6, and/or the second anti-shatter layer in embodiments of the present invention in which these layers are provided on the glass body 1. The plasma activation step may enhance the adhesive properties of the first surface 2 and the second surface 3 of the glass body 1.

The method may further comprise depositing the first anti-shatter layer 4 on the first surface 2. By way of a non-limiting example, the depositing may be performed by spraying the first anti-shatter layer 4 on the first surface 2. By way of a non-limiting example, the first anti-shatter layer 4 is a plastic resin material, as elaborated above.

The method may further comprise depositing the first coating layer 5 on the first anti-shatter layer 4. By way of a non-limiting example, the first-coating layer 5 may be deposited by spraying.

The method may further comprise depositing the second coating layer 6 on the second surface 3. The method may optionally comprise a step of providing the second anti-shatter layer on the second surface 3 before depositing the second coating layer 6.

The method described above enables for fabrication of a vehicle interior element having a thick glass body 1 with a complex shape. The method further enables that the thick, complex shape glass body 1 is coated with one or more additional layers and thereby behaves like a laminated glass that can prevent or at least reduce the spreading away of fragments of the part of the vehicle interior on which the vehicle interior element is mounted, thereby increasing the safety of the vehicle occupants during a safety related situation such as a collision or other impact that may lead to a damage of the part on which the vehicle interior element is mounted. In addition, since at first the thick complex shape glass body 1 is fabricated and then the one or more additional layers are provided on the thick complex shape glass body 1, it is enabled that the glass body 1 is uniformly covered with the one or more additional layers, so that the vehicle interior element behaves like a laminated glass. The current technologies for forming laminated glass do not allow for forming complex shaped laminated glass.

The present invention also relates to a vehicle comprising the vehicle interior glass element of the embodiment of the present invention described above. In addition, it is to be understood that one or more functionalities, such as for example, touch screen functionality may be added to the vehicle interior element.

Although detailed embodiments have been described, these only serve to provide a better understanding of the invention defined by the appended claims and are not to be seen as limiting.

## Claims

1. A vehicle interior element comprising a glass body, the glass body having a first surface for mounting the vehicle interior element in the vehicle interior and a second surface to face the vehicle interior when the vehicle interior element is mounted in the vehicle interior,
wherein, the glass body in at least one portion has a first thickness t1 between the first surface and the second surface, wherein preferably the first thickens t1 is at least 2.0 mm,
wherein at least a part of at least one of the first surface and the second surface has a profiled shape, wherein the height of the profiled shape on at least one position is at least 3 to 4 times the first thickness t1.

2. The vehicle interior element according to claim **1,** further comprising a first anti-shatter layer provided on the first surface.

3. The vehicle interior element according to any one of claims 1 and 2, further comprising a first coating layer provided on the first anti-shatter layer.

4. The vehicle interior element according to any one of claims 1 to 3, further comprising a second coating layer provided on the second surface, wherein preferably, a second anti-shatter layer is provided between the second surface and the second coating layer.

5. The vehicle interior element according to any one of claims 1 to 4, wherein the profiled shape comprises at least one of a projection, a bent portion, and a curved portion.

6. The vehicle interion element according to any one of claims 1 to 5, wherein the profiled shape is in conformity with the shape of a part in the vehicle interior on which the vehicle interior element is to be mounted, said part being a part of the body of the vehicle.

7. A method for producing a vehicle interior element comprising a glass body, the glass body having a first surface for mounting the vehicle interior element in the vehicle interior and a second surface to face the vehicle interior when the vehicle interior glass element is mounted in the vehicle interior, wherein the glass body in at least one portion has a first thickness t1 between the first surface and the second surface, wherein preferably the first thickness t1 is at least 2.0 mm,
wherein at least a part of at least one of the first surface and the second surface has a profiled shape, wherein the height of the profiled shape on at least one position is at least 3 to 4 times the first thickness t1, the method comprising:
- providing a glass element in a mould unit;
- heating the glass element provided in the mould unit to thereby melt the glass element in the mould unit;
- cooling the melted glass element in the mould unit to thereby provide a solid glass element;
- removing the solid glass element from the mould unit,
and
- milling the solid glass element to produce the glass body.

8. The method according to claim 7, wherein the glass element is a raw glass block.

9. The method according to any one of claims 7 and 8, further comprising:
- grinding the glass body, wherein preferably, the grinding is performed with a handheld grinding means.

10. The method according to any one of claims 7 to 9, further comprising:
- polishing the glass body, wherein polishing the glass body comprises at least one of a mechanical polishing and a chemical polishing.

11. The method according to any one of claims 7 to 10, further comprising:
- performing a plasma activation step on the glass body.

12. The method according to any one of claims 7 to 11, further comprising depositing a first anti-shatter layer on the first surface of the glass body, wherein preferably depositing is performed by spraying the first anti-shatter layer on the first surface, wherein preferably the anti-shatter layer is a plastic resin material.

13. The method according to any one of claims 7 to 12, further comprising depositing a first coating layer on the first anti-shatter layer.

14. The method according to any one of claims 7 to 13, further comprising:
- depositing a second coating layer on the second surface and preferably providing a second anti-shatter layer on the second surface before depositing the second coating layer.

15. The method according to any one of claims 7 to 14, wherein the mould unit has a profiled shape for imparting the profiled shape to the second surface.

16. The method according to any one of claims 7 to 15, wherein milling the solid glass element to produce the glass body comprises milling the first surface so that the thickness of the glass body between the first surface and the second surface in at least one portion of the glass body is the first thickness t1, wherein preferably the first thickness t1 is at least 2.0 mm.

17. The method according to claim 16, wherein milling the first surface comprises milling the first surface to obtain the profiled shape of the first surface to conform with a shape of a part in the vehicle interior on which the vehicle interior element is to be mounted, said part being a part of the body of the vehicle.

18. A vehicle comprising the vehicle interior element of claim 1.
